# EUROPÄISCHE PATENTANMELDUNG

(11) **EP 2 607 815 A2**
(43) Veröffentlichungstag der Anmeldung: **26.06.2013**
(21) Anmeldenummer: 12198463.7
(22) Anmeldetag: 20.12.2012
(51) Int. Cl.: F24J 2/34, F24J 2/46

(54) **Solarkollektor für eine Solarthermie-Anlage und Verfahren zur Begrenzung einer Stagnationstemperatur eines Sollarkollektors**

(30) Priorität: 21.12.2011 DE 102011121779
(71) Anmelder: ROBERT BOSCH GMBH, 70442 Stuttgart (DE)
(72) Erfinder: Stumpp, Hermann, 73730 Esslingen (DE); Ramsteiner, Ingo, 71229 Leonberg (DE); Clement, Uwe, 73114 Schlat (DE)

(57) **Zusammenfassung**

Die Erfindung betrifft einen möglichst leichten und kostengünstig herzustellenden Solarkollektor aus Kunststoff oder Kunststoffschaum zur Verfügung zu stellen, bei dem die Gefahr einer Überhitzung, z.B. durch Ausfallen der Wärmepumpe oder weil der Wärmespeicher seine Kapazitätsgrenze erreicht hat, vermieden werden kann. Weiterhin ist es Aufgabe der Erfindung die hohen Stagnationstemperaturen, die aus Kunststoff gefertigte Solarkollektoren üblicherweise aufweisen, zu reduzieren, ohne dabei eine generelle Verringerung der Energieeinstrahlung mittels mechanischer Jalousien oder elektro- oder thermochromer Schichten vorzunehmen. Weiterhin sollen Temperaturspitzen mit dem erfindungsgemäßen Solarkollektor abgepuffert werden.

Dazu werden Phasenwechselmaterialien (16) in den Solarkollektor (10) eingebracht, wobei die Kammern (40), die das Phasenwechselmaterial (16) enthalten vorzugsweise in den Seitenwänden (12) des Solarkollektors (10) angeordnet sind. Die das Phasenwechselmaterial (16) enthaltenen Kammern (40) sind dabei in der Art konstruiert, dass bei geschmolzenem Phasenwechselmaterial ein Konvektionsstrom einsetzt, der aktiv die Wärme aus dem Innenraum des Solarkollektors (10), über die Seitenwand (12) hinweg, herausbefördert, wobei keine Pumpe benötigt wird.

## Beschreibung

Die Erfindung betrifft einen Solarkollektor für eine Solarthermieanlage nach dem Oberbegriff des Patentanspruchs 1 und ein Verfahren zur Begrenzung einer Stagnationstemperatur eines Solarkollektors nach Anspruch 12.

Solarkollektoren sind allgemein bekannt. Sie haben die Aufgabe Energie aus der Umwelt, insbesondere durch Sonneneinstrahlung, aufzunehmen und zur Erwärmung von Räumen oder Wasser zu nutzen. Dazu weisen die Solarkollektoren üblicherweise eine Absorberplatte auf, die Energie in Form von Licht aufnimmt, in Wärme umwandelt, und diese an ein Wärmeträgermedium (Solarfluid) in einer Wärmeleitvorrichtung (Kanalstruktur), welche mit der Absorberplatte in wärmeleitendem Kontakt steht, abgibt. Das Wärmeträgermedium transportiert in einem Kreislauf die im Solarkollektor gewonnene Wärme zu einem oder mehreren Wärmeverbrauchern, beispielsweise in einen Wärmespeicher oder ein Heizsystem, wo sie bei Bedarf abgerufen werden kann.

Im Stand der Technik sind verschiedene Ausführungsformen solcher solarthermischen Kollektoren beschrieben. Für gewöhnlich bestehen diese Solarkollektoren zum Großteil aus Glas und Metall, wie z.B. Aluminium oder Kupfer, und weisen aus diesem Grund ein hohes Eigengewicht auf. Dies wirkt sich nachteilig auf die Montage der Solarkollektoren auf dem Dach und eine hohe Dachbelastung aus. Außerdem sind die Material- und Herstellungskosten hoch.

Weiterhin beschreibt DE 10 2006 020 535 A1 einen Solarkollektor zum Aufnehmen und Speichern von Sonnenenergie. Dabei wird als latenter Wärmespeicher Phasenwechselmaterialien mit einem niedrigen Schmelzpunkt von -5 °C und +15 °C eingesetzt, um auch bei geringerer Sonneneinstrahlung, wie sie in nördlicheren Breiten üblich ist, einen höheren Wirkungsgrad zu erzielen. Da die in diesem System eingesetzten Phasenwechselmaterialien einen niedrigen Schmelzpunkt aufweisen, kann die beim Phasenübergang freiwerdende Wärme nicht direkt zum Heizen von Räumen genutzt werden. Hierfür ist eine Wärmepumpe erforderlich. Bei drohender Überhitzung, die bei diesen niedrigen Phasenübergangstemperaturen schnell erreicht ist, muss der Solarkollektor vor weiterer Sonneneinstrahlung geschützt werden, insbesondere auch bei deaktivierter Wärmepumpe. Dazu wird der Solarkollektor mit einer Jalousie abgedeckt, wodurch potentiell nutzbare Energie ungenutzt verschenkt wird. Auch wenn durch das Phasenwechselmaterial Temperaturspitzen abgepuffert werden können, ist keine effektive Nutzung der eingestrahlten Sonnenenergie möglich.

Ein wichtiger Betriebsfall (Betriebszustand) eines Solarkollektors ist die sogenannte Stagnation. Diese tritt ein, wenn kein Verbraucher die absorbierte, in Wärme umgewandelte Energie abnimmt. Eine entsprechende Eigenschaft des Solarkollektors ist die Stagnationstemperatur. Diese kennzeichnet die Temperatur, ab welcher genauso viel Energie in Form von Wärme durch Abstrahlung, Konvektion und Wärmeleitung verloren geht, wie Energie durch Sonneneinstrahlung zugeführt wird. Der Wirkungsgrad des Solarkollektors sinkt bei Erreichen der Stagnationstemperatur auf null. Die Stagnationstemperatur kennzeichnet somit die maximale Temperatur, die ein Solarkollektor erreichen kann. Diese Stagnationstemperatur ist regelmäßig so hoch, dass bei deren Erreichen Bauteile wie z.B. die Absorberplatte des Solarkollektors oder das Solarfluid bereits erheblich beschädigt werden können. Außerdem verdampft bei Stagnation in der Regel das Wärmeträgermedium (Solarfluid). Die Dampfblase unterbricht die Zirkulation des Wärmeträgermediums durch die Kanalstruktur des Absorbers und die Wärmeabgabe vom Kollektor an einen Verbraucher solange, bis der Dampf bei niedrigeren Temperaturen wieder kondensiert. Dies kann regelmäßig auch mehrere Stunden dauern, während dieser Zeit müssen eventuelle Wärmebedarfe seitens der Verbraucher gegebenenfalls von konventionellen Wärmeerzeugern bereitgestellt werden, was dem Gedanken der regenerativen Energiegewinnung widerspricht. Ferner gewinnt die Verwendung von Kunststoff oder Kunststoffteilen zur Reduktion von Herstellungskosten und Gewicht an Bedeutung.

Phasenwechselmaterialien (PCM, phase change material) in mikrogekapselter Form mit einem Durchmesser von nur wenigen Mikrometern als Latentwärmespeicher sind in DE 100 19 931 C1 offenbart. Die Schmelztemperatur der Phasenwechselmaterialien liegt für diese Anwendung im Bereich von 14 °C bis 40 °C. Diese Phasenwechselmaterialien werden in Wandflächen in Form eines Hypokaustenelements zur Temperierung von Räumen eingesetzt. Dabei weisen die einzelnen Hypokaustenelemente eine innere Kanalstruktur auf, die mit warmer Luft durchströmt wird. Die durchströmende Luft kann von einem Solarkollektor erwärmt werden und die Wärmeenergie anschließend an das Phasenwechselmaterial weitergeben. Bei Abkühlung der Raumtemperatur kann die im PCM gespeicherte Wärmeenergie später wieder an die Raumluft abgegeben werden. Auch diese Mikrokapseln können einen Solarkollektor nicht vor Überhitzung schützen.

Der Erfindung liegt die Aufgabe zugrunde, die Nachteile des Standes der Technik zu beseitigen, und eine Überhitzung des Solarkollektors, z.B. bei deaktivierten Verbrauchern oder weil ein Wärmespeicher seine Kapazitätsgrenze erreicht hat, zu vermeiden.

Erfindungsgemäß wird dies mit den Merkmalen der Patentansprüche 1 und 12 gelöst. Vorteilhafte Weiterbildungen sind den Unteransprüchen zu entnehmen.

Bei einem Solarkollektor mit einem Gehäuse, das von Seitenwänden und einem Boden gebildet ist, mit einer Frontplatte, wobei das Gehäuse und die Frontplatte einen Innenraum begrenzen, und wobei das Gehäuse eine Außenseite aufweist, mit einer in dem Innenraum angeordneten Absorberplatte, und mit einer Kanalstruktur für ein Wärmeträgermedium, sieht die Erfindung vor, dass in den Seitenwänden und/oder im Boden des Gehäuses wenigstens eine mit einem Phasenwechselmaterial gefüllte Kammer ausgebildet ist, und dass die wenigstens eine Kammer einen ersten Teilbereich aufweist, der zumindest abschnittsweise dem Innenraum zugewandt ist, und einen zweiten Teilbereich aufweist, der zumindest abschnittsweise der Außenseite zugewandt ist. Dabei kann eine größere Kammer in einem größeren Abschnitt mindestens einer Seitenwand und/oder des Bodens ausgebildet sein, und es können mehrere kleinere Kammern in jeweils kleineren Abschnitten mindestens einer Seitenwand und/oder des Bodens ausgebildet sein.

Dabei liegt ein Vorteil in dem Einbringen von Phasenwechselmaterial in die Seitenwände oder den Boden des Gehäuses des Solarkollektors, wodurch überschüssige eingestrahlte Wärmeenergie im ersten Teilbereich der Kammer zwischengespeichert werden kann und nicht verloren geht. Dadurch können effektiv Temperaturspitzen begrenzt (abgepuffert) werden, ohne dass das Wärmeträgermedium (Solarfluid) in der benachbarten Kanalstruktur des Absorbers verdampft. Bei Abkühlen des Solarkollektors kristallisiert das Phasenwechselmaterial wieder aus, wobei die zuvor aufgenommene Wärmeenergie wieder an den Innenraum abgegeben wird und so genutzt über die Kanalstruktur den Verbrauchern zugeführt werden kann. Auf diese Weise geht die zwischengespeicherte Wärmeenergie nicht verloren. Ein weiteres Aufheizen des Solarkollektors über den Schmelzpunkt des Phasenwechselmaterials hinaus wird optimal verhindert. Wenn das in den Kammern vorhandene Phasenwechselmaterial in beiden Teilbereichen geschmolzen ist, wird zudem eine Überhitzung des Solarkollektors verhindert, indem eine Wärmeübertragung vom Inneren des Solarkollektors an die Umgebung ermöglicht wird. Dieser Kühleffekt liegt in der speziellen Konstruktion der Teilbereiche begründet, wodurch bei geschmolzenem Phasenwechselmaterial ein Konvektionsstrom innerhalb der Kammer erzeugt wird. Dadurch wird die Wärme vom Innenraum über den ersten Teilbereich zum zweiten Teilbereich transportiert und von hier über die Außenseite des Solarkollektors an die Umgebung abgegeben. Weiterhin können wegen des Abpufferns der Temperaturspitzen leichte und kostengünstig herzustellende Solarkollektoren aus Kunststoff oder Kunststoffschaum zur Verfügung gestellt werden.

Sinnvollerweise sind die beiden Teilbereiche von einem Trennelement in eine erste Teilkammer und eine zweite Teilkammer unterteilt, wobei die beiden Teilkammern jedoch in zwei voneinander beabstandeten Bereichen strömungsverbunden sind. In der Einbausituation sollten die Strömungsverbindungen unterschiedlich hoch angeordnet sein, vorzugsweise am oberen und unteren Ende der Kammer (Positionsangabe bezieht sich zum Beispiel auf die Einbaulage des Kollektors). Durch diesen speziellen Aufbau der Kammer wird ein Temperaturgradient innerhalb der Kammer, genauer gesagt zwischen den beiden Teilkammern, ausgebildet. Bei einem Schmelzen des Phasenwechselmaterials wird ein Konvektionsstrom innerhalb der Kammer ausgelöst, der effektiv die Wärmeisolation des Solarkollektors verschlechtert, Temperaturspitzen abpuffert, ein Überhitzen und eine damit einhergehende mögliche Beschädigungen einzelner temperaturempfindlicher Bauteile sowie ein Verdampfen des Wärmeträgermediums (Solarfluid) verhindert. Diese speziell geformten Kammern verringern die Stagnationstemperatur des Solarkollektors.

Gemäß einer weiteren Ausgestaltung der Erfindung ist es besonders vorteilhaft, wenn das Trennelement aus einem thermisch isolierenden Material besteht. So wird eine gute thermische Isolation des Solarkollektors ermöglicht, wenn das Phasenwechselmaterial nicht geschmolzen ist. Ist das Phasenwechselmaterial hingegen geschmolzen, wird ein Konvektionsstrom zwischen erster und zweiter Teilkammer ermöglicht. Dieser Konvektionsstrom wird durch das thermisch isolierende Trennelement verbessert, da der Temperaturgradient und damit der die Konvektionsbewegung antreibende Dichteunterschied zwischen den beiden Teilkammern durch die isolierende Wirkung des Trennelements vergrößert wird.

Eine Weiterbildung der Erfindung sieht vor, dass das Trennelement in seiner Flächenerstreckung parallel zu einer Seitenwand oder dem Boden des Gehäuses angeordnet ist. Das bietet den Vorteil, dass eine Wärmeübertragung vom Inneren des Solarkollektors zur Außenseite durch die größeren Wärmeübertragungsflächen verbessert und eine Überhitzung des Solarkollektors noch effektiver verhindert wird.

Eine weitere vorteilhafte Ausführung der Erfindung sieht vor, dass die Teilkammern in ihrer Flächenerstreckung parallel zu einer Seitenwand oder dem Boden des Gehäuses angeordnet sind. Eine Wärmeübertragung vom Inneren des Solarkollektors zur Außenseite wird durch die größeren Wärmeübertragungsflächen verbessert und eine Überhitzung des Solarkollektors noch besser verhindert. Weiterhin wird auch eine Wärmeübertragung an die äußere Umgebung verbessert.

Gemäß einer Weiterbildung ist an einer Seitenwand und/oder dem Boden des Gehäuses wenigstens ein Kühlelement angeordnet. Hierdurch wird die Wärmeabgabe an die Umgebung wesentlich verbessert.

Vorteilhafterweise ist das Kühlelement einer der Außenseite des Gehäuses zugewandten zweiten Teilkammer zugeordnet. Diese Ausgestaltung ermöglicht eine gute Wärmeabgabe der vom Phasenwechselmaterial an der Innenseite des Gehäuses aufgenommenen, überschüssigen Wärmemenge, an der Außenseite des Solarkollektors.

In einer vorteilhaften Weiterbildung der Erfindung steht die Absorberplatte mit der dem Innenraum zugewandten ersten Teilkammer in thermischem Kontakt, wodurch die Wärme von der heißesten Komponente im Solarkollektor, der Absorberplatte, effektiv an die mit Phasenwechselmaterial gefüllten Kammern abgegeben wird. Dadurch schmilzt das Phasenwechselmaterial sehr schnell, wenn die Stagnationstemperatur des Solarkollektors erreicht ist, und die Wärmeabgabe an die Umgebung setzt mit nur sehr geringer Zeitverzögerung ein, so dass ein Überhitzen des Solarkollektors verhindert wird. Der erfindungsgemäße Solarkollektor weist somit einen effektiven Überhitzungsschutz auf.

Vorzugsweise weist das Phasenwechselmaterial in der Kammer einen höheren Schmelzpunkt auf, als das Wärmeträgermedium in der Kanalstruktur. So wird gewährleistet, dass das Phasenwechselmaterial erst bei beginnender Überhitzung anfängt aufzuschmelzen, sodass Wärme aus dem Innenraum abgeleitet wird. Auf diese Weise wird die Leistungsfähigkeit des Solarkollektors durch das Überhitzungsschutzsystem nicht beeinträchtigt. Erst bei einer drohenden Überhitzung wird die überschüssige Wärmeenergie vom dann flüssigen, zirkulierenden Phasenwechselmaterial aufgenommen und an die Umgebung abgeführt. Sinnvollerweise liegt der Schmelzpunkt des Phasenwechselmaterials knapp unterhalb einer Verdampfungstemperatur des Solarfluids beziehungsweise knapp unterhalb einer maximal zulässigen Betriebstemperatur des Solarkollektors. Diese liegt bevorzugt in einem Temperaturbereich zwischen 120 °C und 150 °C. Bei aufgeschmolzenem Phasenwechselmaterial setzt ein Konvektionsstrom

(Zirkulation) innerhalb der Kammer ein, der einen Wärmetransport vom Innenraum an die Außenseite erlaubt, wodurch die Innentemperatur in dem Solarkollektor begrenzt wird und eine Verdampfung des Solarfluids sowie Schädigung der temperaturempfindlichen Bauteile verhindert werden. Dieser Konvektionsstrom kann auf die spezielle Form der Phasenwechselmaterial enthaltenden Kammer zurückgeführt werden. Dadurch kann im Wesentlichen nur bei drohender Überhitzung Wärme über die Kammer aus dem Innenraum an die Außenseite des Gehäuses und an die Umgebung abgeführt werden.

Besonders vorteilhaft ist die Erfindung bei einem aus Kunststoffmaterial bestehenden Gehäuse. Das hat den großen Vorteil, dass solche Kollektoren ein nur sehr geringes Eigengewicht mitbringen und aus diesem Grund sehr gut für die Montage auf Dächern geeignet sind. Weiterhin sind die Gehäuse sehr günstig und einfach herstellbar. Auch aus sicherheitstechnischer Sicht bieten diese Gehäuse ebenfalls einen großen Vorteil.

Bevorzugt weist der Solarkollektor ein Gerüst aus einer Kanalstruktur, einer Absorberplatte, mindestens einer Phasenwechselmaterial enthaltenden Kammer und Kühlelementen auf, wobei das Gerüst wenigstens teilweise mit Kunststoffschaum umschäumt ist. Dadurch können die Strukturen im Gehäuse wie z.B. Phasenwechselmaterial enthaltende Kammern vorpositioniert und exakt ausgerichtet werden, bevor diese mit Kunststoffschaum umschäumt werden und ihre feste Position im Gehäuse erhalten. Die Fertigung ausgewählter Elemente aus Metall ermöglicht eine schnelle und gute Wärmeübertragung von der Innenseite des Solarkollektors über das Phasenwechselmaterial in der Kammer bis an die Außenseite des Solarkollektors und somit an die Umgebung.

In einer alternativen Ausführungsform, kann die Kammer einschließlich isolierendem Trennelement bei Fertigung des Gehäuses in ein Formwerkzeug eingelegt und mit Kunststoffschaum umschäumt werden. Dazu muss die Kammer einen Hohlraum aufweisen, der beim Ausschäumen mit Kunststoffschaum so aufgefüllt wird, dass das Trennelement ausgebildet wird. Dadurch ist es nicht mehr notwendig ein Trennelement in die Kammer, die das Phasenwechselmaterial enthält, einzubauen. Es wird einfach eine ringförmige und mit Phasenwechselmaterial gefüllte Kammer in das Gehäuse eingelegt und umschäumt. Dadurch bildet der Kunststoffschaum das Trennelement während des Ausschäumens aus. Mit dieser Methode können Arbeitsschritte eingespart werden. Somit kann der Solarkollektor einfacher, schneller sowie kostengünstiger hergestellt werden. In einer weiteren Ausführungsform ist vorgesehen, dass die Kammer mittels erstarrtem Phasenwechselmaterial ausgebildet wird, indem das erstarrte Phasenwechselmaterial direkt mit Kunststoffschaum umschäumt wird. Bei dieser Methode kann komplett auf eine Kapsel jeglicher Art oder ein Trennelement verzichtet werden. Das Phasenwechselmaterial kann hierfür in eine ringförmige Form gebracht werden, in deren Mitte ein Hohlraum vorhanden ist. Das so geformte und in kaltem Zustand feste Phasenwechselmaterial wird in ein Formwerkzeug eingelegt und kann mit Kunststoffschaum umschäumt werden. Dabei sollte die Abkühlung des Kunststoffschaums schnell genug erfolgen, damit das ringförmige Phasenwechselmaterial bei der Fertigung nicht aufschmilzt und die Kammerform verloren geht. Diese Methode erlaubt die weitere Einsparung von Kosten und Material, weil weitere Arbeitsschritte und Material eingespart werden können.

Weiterhin betrifft die Erfindung ein Verfahren zur Begrenzung einer Stagnationstemperatur eines Solarkollektors durch Anordnung eines zweiten Wärmeträgermediums umfassend folgende Schritte:
1) Einbringen von Wärme in einen Innenraum des Solarkollektors durch solare Strahlung;
2) Abtransport von Wärme aus dem Innenraum bei Überschreiten einer Innenraumgrenztemperatur durch Aufschmelzen des zweiten Wärmeträgermediums in der Kammer und durch Ausbildung eines Konvektionsstroms innerhalb der Kammer, wobei ein erster Teilbereich der Kammer Wärme vom Innenraum aufnimmt und ein zweiter Teilbereich der Kammer Wärme über die Außenseite des Gehäuses des Solarkollektors an dessen Umgebung abgibt.

Dabei nimmt das zweite Wärmeträgermedium, welches in den Kammern angeordnet ist und ein Phasenwechselmaterial ist, die überschüssige Wärme auf und ermöglicht, wenn dieses geschmolzen ist, einen Wärmetransport der überschüssigen Wärme innerhalb des Kollektors über die Gehäusewandung des Solarkollektors hinweg an die Umgebung.

In einer vorteilhaften Ausführung wird für das vorstehende Verfahren ein Solarkollektor eingesetzt, der ein Gehäuse, das von Seitenwänden und einem Boden gebildet ist, und eine Frontplatte aufweist, wobei das Gehäuse und die Frontplatte einen Innenraum begrenzen, und wobei das Gehäuse eine Außenseite aufweist, wobei in dem Innenraum eine Absorberplatte und eine Kanalstruktur für ein Wärmeträgermedium angeordnet sind, wobei in den Seitenwänden und/oder im Boden des Gehäuses wenigstens eine mit einem Phasenwechselmaterial gefüllte Kammer ausgebildet ist, und wobei die wenigstens eine Kammer einen ersten Teilbereich, der zumindest abschnittsweise dem Innenraum zugewandt ist, und einen zweiten Teilbereich aufweist, der zumindest abschnittsweise der Außenseite zugewandt ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen
- Fig.1: einen schematischen Längsschnitt durch einen erfindungsgemäßen Solarkollektor,
- Fig. 2: einen Ausschnitt eines schematischen Längsschnitts durch den erfindungsgemäßen Solarkollektor mit im Rahmen und Boden angeordneten Kammern und angedeuteter Konvektionsströmung,
- Fig. 3: einen Ausschnitt eines schematischen Längsschnitts durch eine weitere Ausführungsform des erfindungsgemäßen Solarkollektors mit im Rahmen und Boden angeordneten Kammern und angedeuteter Konvektionsströmung und Kühlelement.

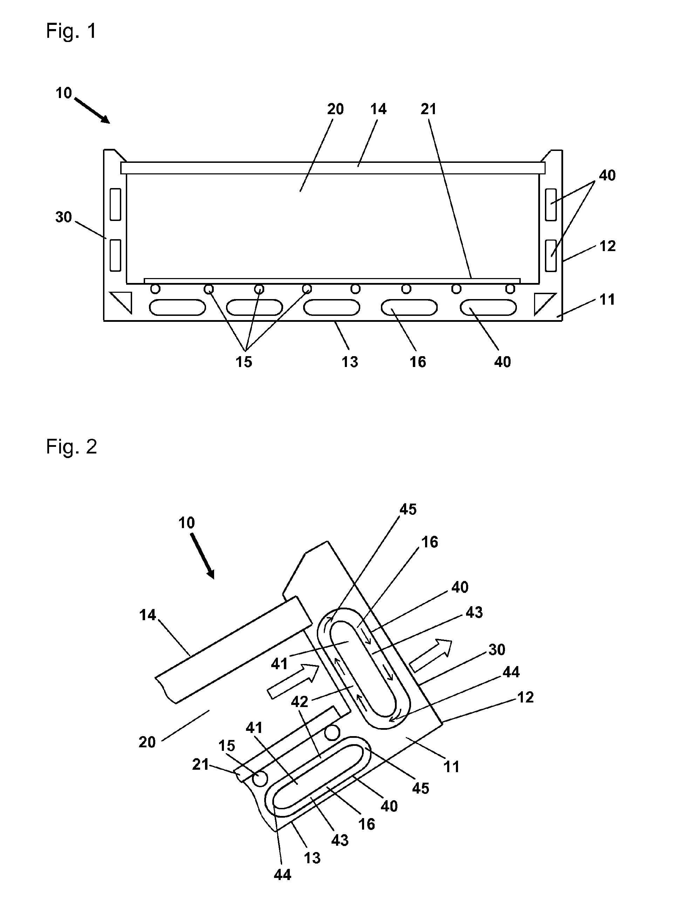

Fig. 1 zeigt einen Solarkollektor 10 mit einem aus Kunststoff gefertigten Gehäuse 11, das von Seitenwänden 12 und einem Boden 13 gebildet ist. Dabei bilden das Gehäuse 11 mit einer Frontplatte 14 einen Innenraum 20 aus, in dem eine Absorberplatte 21 angeordnet ist. Unter der Absorberplatte 21 ist eine Kanalstruktur 15 für ein Wärmeträgermedium (Solarfluid) ausgebildet, womit die über den Solarkollektor 10 aufgenommene Wärme z.B. in einen Wärmespeicher abgeleitet werden kann. In den Seitenwänden 12 und/oder im Boden 13 des Gehäuses 11 sind Kammern 40, die das Phasenwechselmaterial 16 enthalten. Diese Kammern 40 umfassen einen signifikanten Volumenanteil des Gehäuses 11.

Vorteilhaft ist es, wenn das eingesetzte Phasenwechselmaterial 16 eine Phasenübergangstemperatur aufweist, die niedrig genug ist, um ein Überhitzen der temperaturempfindlichen Komponenten über den Spezifikationswert zu vermeiden, jedoch nicht zu niedrig ist, um die Temperatur des Solarkollektors 10 nicht unnötig zu begrenzen. Die Phasenübergangstemperatur (T₀) für das Phasenwechselmaterial 16, welches in dem erfindungsgemäßen Solarkollektor 10 eingesetzt wird, liegt zwischen 120 °C und 150 °C. Weiter weist das eingesetzte Phasenwechselmaterial 16 eine große latente Wärme (L) auf, insbesondere über 200 J/g. Zudem ist es preisgünstig, ökologisch und toxikologisch unbedenklich und nicht explosions- oder feuergefährlich.

Da das Phasenwechselmaterial 16 durch das ständige Aufschmelzen und Kristallisieren einer hohen Belastung ausgesetzt ist, weist das Phasenwechselmaterial 16 eine hohe chemische Stabilität auf.

Als Phasenwechselmaterialien können in dem erfindungsgemäßen Solarkollektor 10 zum Beispiel längerkettige Dicarbonsäuren, wie Adipinsäure (T₀=151-155 °C, L=260 J/g) oder Sebacinsäure (T₀=130-134 °C, L=228 J/g) oder aromatische Carbonsäuren oder deren Derivate, wie zum Beispiel Benzoesäure (T₀=122 °C), Phthalsäureanhydrid (T₀=131 °C) oder Dimethyltherephthalat (T₀=142 °C) eingesetzt werden. Wobei die aromatischen Carbonsäuren und Carbonsäurederivate eine geringere latente Wärme (L=120-170 J/g) aufweisen, als die längerkettigen Alkandisäuren.

Je größer die in den Solarkollektor 10 eingebrachte Menge an Phasenwechselmaterial 16 ist, desto größer ist die Menge an Sonnenwärme, die gespeichert werden kann, bevor der einsetzende Konvektionsstrom zu Energieverlusten durch Wärmeabgabe an die Umgebung führt. Die Sonneneinstrahlung beträgt auf der Erdoberfläche bis zu 1 kW/m². Hat der Solarkollektor 10 bei T₀ noch eine Effizienz von 30 %, so müssen 300 W/m² an Sonnenenergie zwischengespeichert werden, um Energieverluste zu vermeiden. Wenn ein Solarkollektor 10 bei einer Fläche von 1 m² insgesamt 10 kg Sebacinsäure enthält, so können von diesem Solarkollektor eine Wärmeenergie von 2,28 MJ zwischengespeichert werden (10 kg * 228 kJ/kg = 2,28 MJ). Somit kann ein Solarkollektor, der 10 kg Sebacinsäure (ρ=1,27 g/mL) als Phasenwechselmaterial 16 enthält, was ungefähr einem Volumen von 8 Litern entspricht, bei einer Solarkollektorinnentemperatur von T₀=130-134 °C diese für über zwei Stunden konstant halten, bevor die Energie mittels des Konvektionsstroms an die Umgebung abgegeben wird. Auf diese Weise können Temperaturspitzen über einen Zeitraum von ungefähr 2 Stunden effektiv abgepuffert werden, ohne dabei allzu große Energieverluste in Form von Wärmeabgabe an die Umgebung zu verursachen.

Fig. 2 zeigt einen vergrößerten Ausschnitt eines Längsschnitts durch den erfindungsgemäßen Solarkollektor 10. Im festen, also nicht aufgeschmolzenen Zustand des Phasenwechselmaterials wirken die in den Seitenwänden 12 und/oder im Boden 13 des Gehäuses 11 angeordneten und mit Phasenwechselmaterial 16 gefüllten Kammern 40 isolierend. Ist das Phasenwechselmaterial 16 in den Kammern 40 komplett aufgeschmolzen, so ist die Wärmespeicherkapazität des Phasenwechselmaterials 16 in Form von latenter Wärme damit komplett ausgenutzt. Die dadurch entstehende Temperaturdifferenz zwischen dem aufgeheizten Innenraum 20 oder der heißen Absorberplatte 21 und der kälteren Außenseite 30 induziert einen Konvektionsstrom des flüssigen Phasenwechselmaterials 16 in den Kammern 40 um das aus thermisch isolierendem Material bestehende Trennelement 41 herum. Das Trennelement 41 kann sowohl aus einem gasgefüllten Hohlraum, einem Schaumstoff oder einer Vakuumkapsel bestehen. Bei diesem Konvektionsstrom wird Wärme aus dem Innenraum 20 des Solarkollektors 10 heraus transportiert. Dieses wird durch die konkrete Gestaltung der mit Phasenwechselmaterial 16 gefüllten Kammern 40 begünstigt.

Die mindestens eine Kammer 40 ist durch ein Trennelement 41 in eine erste Teilkammer 42 und eine zweite Teilkammern 43 unterteilt, wobei die Teilkammern 42, 43 in zwei voneinander beabstandeten Bereichen 44, 45 strömungsverbunden sind, während das Trennelement 41 parallel zu einer Seitenwand 12 oder dem Boden 13 des Gehäuses 11 angeordnet ist. Dadurch wird die erste Teilkammer 42 zumindest abschnittsweise dem Innenraum zugeordnet, während die zweite Teilkammer 43 zumindest abschnittsweise der Außenseite 30 des Gehäuses 11 zugeordnet ist. So steht die erste Teilkammer 42 in Wärmekontakt zur Innenseite, die zweite Teilkammer 43 in Wärmekontakt zur Außenwand. Dies ermöglicht, dass sich ein Konvektionsstrom des Phasenwechselmaterials in den Kammern aufgrund der Temperaturdifferenz zwischen der Innenseite 20 und der Außenseite 30 des Solarkollektors 10 ausbildet. In den mit Phasenwechselmaterial 16 gefüllten Kammern 40 herrscht ein Temperaturgradient zwischen der ersten Teilkammer 42 und der zweiten Teilkammer 43.

Die der Innenseite 20 des Solarkollektors 10 zugewandte erste Teilkammer 42 enthält heißeres geschmolzenes Phasenwechselmaterial 16 als die der Außenseite 30 zugewandte zweite Teilkammer 43. Aufgrund der Wärmeausdehnung weist die in der zweiten Teilkammer 43 vorliegende kältere Phasenwechselmaterialschmelze eine höhere Dichte auf, als die wärmere Phasenwechselmaterialschmelze in der ersten Teilkammer 42. Dadurch bedingt strömt die Phasenwechselmaterialschmelze in der zweiten Teilkammer 43 abwärts und steigt in der ersten Teilkammer 42 auf. Dieser entstehende Konvektionsstrom ist mit Pfeilen in der Fig. 2 eingezeichnet.

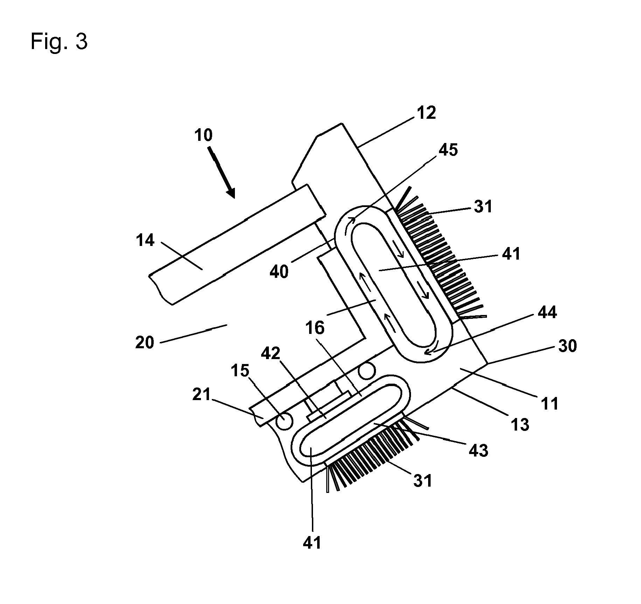

Effektiv wird dabei Wärme um das thermisch isolierende Trennelement 41 herum, von dem Innenraum 20 des Solarkollektors 10 an die Außenseite 30, und damit an die Umgebung abgegeben. Die so konstruierten Kammern 40 verhindern eine Überhitzung des Solarkollektors 10, wenn der Solarkollektor 10 seine Stagnationstemperatur erreicht hat. Fig. 3 zeigt eine Weiterbildung des erfindungsgemäßen Solarkollektors 10. Eine thermische Anbindung der Absorberplatte 21 mit der dem Innenraum 20 zugewandten ersten Teilkammer 42, verbessert die Wärmeübertragung auf das in der ersten Teilkammer 42 befindliche Phasenwechselmaterial 16 erheblich. Diese thermische Anbindung kann durch normale Wärmeleitung oder durch sogenannte Heatpipes ermöglicht werden.

Eine weitere Optimierung der Wärmeabgabe von dem geschmolzenen Phasenwechselmaterial an die Umgebung, wird durch Kühlelemente 31 wie z.B. Kühlrippen, die an den Seitenwänden 12 und/oder dem Boden 13 des Gehäuses 11 angeordnet sind und einer der Außenseite 30 des Gehäuses 11 zugewandten zweiten Teilkammer 43 zugeordnet sind, erreicht.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritte können sowohl für sich, als auch in den verschiedensten Kombinationen erfindungswesentlich sein.

Das vorstehend beschriebene Prinzip der Temperaturbegrenzung ist selbstverständlich auch auf andere Bauteile und Technikgebiete anwendbar, wie zum Beispiel auf Wärmespeicher, Photovoltaik-Kollektoren, elektrotechnische Aggregate und vieles mehr.

### BEZUGSZEICHENLISTE

- 10: Solarkollektor
- 11: Gehäuse
- 12: Seitenwand
- 13: Boden
- 14: Frontplatte
- 15: Kanalstruktur
- 16: Phasenwechselmaterial

- 20: Innenraum
- 21: Absorberplatte

- 30: Außenseite
- 31: Kühlelement

- 40: Kammer
- 41: Trennelement
- 42: erster Teilbereich
- 43: zweiter Teilbereich
- 44: beabstandeter Bereich
- 45: beabstandeter Bereich

## Patentansprüche

1. Solarkollektor (10)
■ mit einem Gehäuse (11), das von Seitenwänden (12) und einem Boden (13) gebildet ist,
■ mit einer Frontplatte (14),
■ wobei das Gehäuse (11) und die Frontplatte (14) einen Innenraum (20) begrenzen, und wobei das Gehäuse (11) eine Außenseite (30) aufweist,
**dadurch gekennzeichnet, dass** in den Seitenwänden (12) und/oder im Boden (13) des Gehäuses (11) wenigstens eine mit einem Phasenwechselmaterial (16) gefüllte Kammer (40) ausgebildet ist, und dass die wenigstens eine Kammer (40) einen ersten Teilbereich (42) aufweist, der zumindest abschnittsweise dem Innenraum (20) zugewandt ist und einen zweiten Teilbereich (43) aufweist, der zumindest abschnittsweise der Außenseite (30) des Gehäuses (11) zugewandt ist.

2. Solarkollektor (10) nach Anspruch 1,
**dadurch gekennzeichnet, dass** die beiden Teilbereiche (42, 43) von einem Trennelement (41) in eine erste Teilkammer (421) und eine zweite Teilkammer (431) unterteilt sind, wobei die beiden Teilkammern (421, 431) jedoch in zwei voneinander beabstandeten Bereichen (44, 45) strömungsverbunden sind.

3. Solarkollektor (10) nach Anspruch 2,
**dadurch gekennzeichnet, dass** das Trennelement (41) aus einem thermisch isolierenden Material besteht.

4. Solarkollektor (10) nach einem der Ansprüche 2 oder 3,
**dadurch gekennzeichnet, dass** das Trennelement (41) parallel zu einer Seitenwand (12) oder dem Boden (13) des Gehäuses (11) angeordnet ist.

5. Solarkollektor (10) nach einem der vorhergehenden Ansprüche,
**dadurch gekennzeichnet, dass** die Teilkammern (42, 43) parallel zu einer Seitenwand (12) oder dem Boden (13) des Gehäuses (11) angeordnet sind.

6. Solarkollektor (10) nach einem der vorhergehenden Ansprüche,
**dadurch gekennzeichnet, dass** an einer Seitenwand (12) und/oder dem Boden (13) des Gehäuses (11) wenigstens ein Kühlelement (31) angeordnet ist.

7. Solarkollektor (10) nach Anspruch 6,
**dadurch gekennzeichnet, dass** das Kühlelement (31) einer der Außenseite (30) des Gehäuses (11) zugewandten zweiten Teilkammer (43) zugeordnet ist.

8. Solarkollektor (10) nach einem der vorhergehenden Ansprüche, mit einer in dem Innenraum (20) angeordneten Absorberplatte (21) zum Umwandeln von absorbierter Solarstrahlung in Wärme,
**dadurch gekennzeichnet, dass** die Absorberplatte (21) mit der dem Innenraum (20) zugewandten ersten Teilkammer (42) in thermischem Kontakt steht.

9. Solarkollektor (10) nach einem der vorhergehenden Ansprüche, mit einer in dem Innenraum (20) angeordneten Absorberplatte (21) zum Umwandeln von absorbierter Solarstrahlung in Wärme und mit einer Kanalstruktur (15) für ein die Absorberplatte kühlendes Wärmeträgermedium,
**dadurch gekennzeichnet, dass** das Phasenwechselmaterial (16) in der Kammer (40) einen höheren Schmelzpunkt aufweist, als das Wärmeträgermedium in der Kanalstruktur (15).

10. Solarkollektor (10) nach einem der vorhergehenden Ansprüche,
**dadurch gekennzeichnet, dass** das Gehäuse (11) aus einem Kunststoffmaterial besteht.

11. Solarkollektor (10) nach einem der vorhergehenden Ansprüche,
**dadurch gekennzeichnet, dass** ein Gerüst aus einer Kanalstruktur (15), einer Absorberpiatte (21), mindestens einer Phasenwechselmaterial enthaltenden Kammer (40) und Kühlelementen (31) besteht, und das Gerüst wenigstens teilweise mit Kunststoffschaum umschäumt ist.

12. Verfahren zur Begrenzung einer Stagnationstemperatur eines Solarkollektors (10) durch Anordnung eines zweiten Wärmeträgermediums
**gekennzeichnet durch** folgende Schritte:
1) Einbringen von Wärme in einen Innenraum (20) des Solarkollektors (10) **durch** solare Strahlung;
2) Abtransport von Wärme aus dem Innenraum (20) bei Überschreiten einer Innenraumgrenztemperatur **durch** Aufschmelzen des zweiten Wärmeträgermediums in einer Kammer (40) und **durch** Ausbildung eines Konvektionsstroms innerhalb der Kammer (40), wobei ein erster Teilbereich (42) der Kammer (40) Wärme vom Innenraum (20) aufnimmt und ein zweite Teilbereich (43) der Kammer Wärme über die Außenseite (30) des Solarkollektors (10) an die Umgebung abgibt.

13. Verfahren nach Anspruch 12,
**dadurch gekennzeichnet, dass** ein Solarkollektor (10) nach einem der Ansprüche 1 bis 11 eingesetzt wird.
